# EUROPÄISCHE PATENTSCHRIFT

(11) **EP 1 882 183 B1**
(45) Veröffentlichungstag und Bekanntmachung des Hinweises auf die Patenterteilung: **21.12.2016**
(21) Anmeldenummer: 06742971.2
(22) Anmeldetag: 18.05.2006
(51) Int. Cl.: G01N 29/26, G01N 29/28, F15D 1/02

(54) **ULTRASCHALL-PRÜFKOPFANORDNUNG**
ULTRASOUND PROBE ARRANGEMENT
DISPOSITIF PALPEUR À ULTRASONS

(30) Priorität: 18.05.2005 DE 102005022729
(43) Veröffentlichungstag der Anmeldung: 30.01.2008
(73) Patentinhaber: GE Inspection Technologies GmbH, 50354 Hürth (DE)
(72) Erfinder: MAURER, Albrecht, 63500 Seligenstadt (DE); STRAUSS, Michael, 63776 Mömbris (DE); DE ODORICO, Walter, 65779 Kelkheim (DE); HAASE, Wolfgang, 63877 Sailauf (DE); KOCH, Roman, 63825 Blankenbauch (DE)
(74) Vertreter: Patentanwälte Bauer Vorberg Kayser
(86) Internationale Anmeldenummer: PCT/EP2006/004697
(87) Internationale Veröffentlichungsnummer: WO 2006/122798

(56) Entgegenhaltungen:
- EP-A- 0 164 168
- DE-A1- 19 521 523
- US-A- 3 908 445
- US-A- 5 242 119
- US-A- 5 431 342
- US-A1- 2002 104 906

## Beschreibung

Die Erfindung bezieht sich auf eine Prüfkopfanordnung von Ultraschallsignalen an ein prüfendes Bauteil mittels Wasserfreistrahltechnik.

Eine derartige Prüfkopfanordnung ist beispielweise in der EP-A-0 164 168 beschrieben. Bei dieser Vorrichtung sind Flüssigkeitsanlassöffnungen vorgesehen, denen jeweils eine Sammelkammer nachgeschaltet ist. In linearer Richtung stromabwärts der Einlassöffnungen sind horizontal verlaufende Ablenkplatten angeordnet, die sich über die gesamte Länge der Kammer erstrecken. Zwar kann eine horizontale Verteilung der Wassermengen mit den Ablenkplatten erreicht werden, jedoch sind diese nicht geeignet, eine laminare Strömung zu erzeugen.

In der GB-A-2 194 051 ist ebenfalls ein Ultraschallgerät zur störungsfreien Prüfung eines Bauteils mittels Wasserfreistrahltechnik beschrieben. Auch bei dieser Anordnung werden die Ultraschallsignale mittels eines Prüfkopfes mit einer Vielzahl von Sende- und/oder Empfangselementen erzeugt, wobei zumindest zwei der Ultraschallsignale über einen einzigen Flüssigkeitsstrahl an das zu prüfende Bauteil angekoppelt werden.

In der DE-A-29 16 933 ist ein Verfahren zur Ultraschall-Werkstoffprüfung beschrieben, wobei mit Hilfe der Wasserfreistrahltechnik (SQUIRTER-Technik) an das zu prüfende Bauteil ein Ultraschall-Signal angekoppelt. Dabei ist vorgesehen, dass mehrere eng beieinander liegende laminare Druckwasserstrahlen zur Ankopplung des Ultraschallsignals verwendet werden und dass die einzelnen Druckwasserstrahlen von separaten Ultraschallschwingen mit variabel einstellbarer Phasenlage (phased arrays) angesteuert werden.

Ein sogenannter Gruppenstrahler besteht aus mehreren Einzelstrahlern, die für sich Kugelwellen abstrahlen. Jeder Einzelstrahler wird von einem gesonderten Sender angesteuert. Hierbei kann die Phasenlage der Einzelstrahler verändert werden. Eine lineare Phasenbeziehung führt zu Strahlschwenkung, eine quadratische zu Strahlfokussierung-Beide Phasenbeziehungen kombiniert verwandeln den Gruppenstrahler in einen Strahler mit schwenkbarer Einschallrichtung und einstellbarer Fokuszone.

Eine Strahldüse zur Durchführung des Verfahrens zeichnet sich dadurch aus, dass diese an ihrer Stirnflache mit einer Vielzahl von Löchern versehen ist, aus denen jeweils ein Druckwasserfreistrahl austritt. Jede der Strahlen führt einen Ultraschallstrahl, der von jeweils einem gesonderten Ultraschallschwinger angeregt wird. Die Phasenlage zwischen allen einzelnen Strahlen ist regelbar.

Aufgrund von Turbulenzen beim Auftreffen jedes der einzelnen Wasserstrahlen, deren Strahldurchmesser minimal halbe Wellenlänge, z. B. ca. 1 mm, beträgt, kann es zu Turbulenzen kommen, die zu einer Schallsignalabschwächung und somit zu einer fehlerhaften Auswertung führen können.

Aufgrund des geringen Strahldurchmessers im Bereich von 1 mm und des geringen Abstandes der Freistrahlen voneinander, der ebenfalls in dieser Größenordnung liegt, kann nur eine geringe Energiemenge eingekoppelt werden, mit der Folge, dass die Anordnung ein hohes Signal-/Rauschverhältnis aufweist, was ebenfalls zu Messungenauigkeiten führen kann.

Der vorliegenden Erfindung liegt das Problem zu Grunde, eine Prüfkopfanordnung der eingangs genannten Art dahingehend weiterzubilden, dass die Strömung des Wassers innerhalb der Strahldüse verbessert wird.

Das Problem wird durch eine Prüfkopfanordnung mit den Merkmalen des Anspruchs 1 gelöst.

Diese erfindungsgemäße Prüfkopfanordnung zur Ankopplung von Ultraschallsignalen an ein zu prüfendes Bauteil mittels Wasserfreistrahltechnik weist zumindest einen Flüssigkeitseinlass sowie zumindest einen Flüssigkeitsauslass auf, wobei dem Flüssigkeitseinlass zumindest zwei Vorlauf- bzw. Filterkammern nachgeschaltet sind, wobei jede Vorlauf- bzw. Filterkammer eine senkrecht zur Strömungsrichtung verlaufende, Strömungskanäle aufweisende Trennwand aufweist, und den Vorlauf- bzw. Filterkammern eine Strahldüse mit einem Strömungsraum nachgeschaltet ist, in dem ein Prüfkopf mit einer Vielzahl von Ultraschall-Sende- und/oder -empfangselementen angeordnet ist. Erfindungsgemäß nimmt die Anzahl der Strömungskanäle in den Trennwänden in Strömungsrichtung zu und der Durchmesser der Strömungskanäle in den Trennwänden ist in Strömungsrichtung verringert. Ferner ist die Strahldüse als Flachstrahldüse mit einem im Wesentlichen trichterförmigen Strömungsraum ausgebildet, der in einen im Wesentlichen spaltförmigen Auslasskanal mit einem Flüssigkeitsauslass übergeht, wobei sich innerhalb des Strömungsraumes eine laminare Wasserströmung einstellt und der Flüssigkeitsauslass derart gestaltet ist, dass dieser einen einzigen, eine Ebene aufspannenden, laminaren flächigen Flüssigkeitsstrahl erzeugt. Zumindest zwei der Ultraschall-Sende- und/oder -empfangselemente sind diesem einzigen Flüssigkeitsstrahl zugeordnet und über eine Ansteuereinheit in ihrer Phasenlage zur Veränderung einer Einschallrichtung und/oder Fokuszone derart einstellbar, dass zumindest die zwei von diesen Ultraschall-Sendeelementen ausgehenden Ultraschallsignale über den einzigen laminaren Flüssigkeitsstrahl an das zu prüfende Bauteil ankoppelbar sind. Dabei sind die in dem Prüfkopf angeordneten Ultraschall-Sende- und/oder -empfangselemente in einer von dem Flüssigkeitsstrahl aufgespannten Ebene angeordnet. Ferner ist der Prüfkopf in dem Strömungsraum angeordnet und koaxial von der Flüssigkeitsströmung umströmt, und der flächige Flüssigkeitsstrahl bildet einen Koppelkanal, in dem die Ultraschallsignale in ihrer Einschallrichtung und/oder ihrer Fokuszone einstellbar sind. Die Strömungskanäle können als Bohrungen ausgeführt sein.

Des Weiteren ist vorgesehen, dass der Flüssigkeitseinlass entlang einer Mittelachse der Strahldüse angeordnet ist. Bei zwei oder mehr Flüssigkeitseinlässen sind diese parallel oder im Wesentlichen parallel zu einer von dem Flüssigkeitsstrahl aufgespannten Ebene angeordnet.

Die Strahldüse ist zur Vermeidung von zusätzlichen Reflexionen und Streuungen vorzugsweise aus einem Kunststoffmaterial mit niedriger Schallgeschwindigkeit wie Acrylglas hergestellt.

Durch den flächigen Wasserstrahl bleibt die laminare Strömung bis zum Auftreffen auf der Oberfläche des zu prüfenden Bauteils erhalten, so dass Turbulenzen nahezu ausgeschlossen werden, wodurch eine ungestörte Schalleinkopplung sowie ein ungestörter Empfang von reflektierten Schallsignalen ermöglicht wird.

Als Wasserstrahl wird ein Flachstrahl mit einer Breite B im Bereich von 4 mm < B < 20 mm und einer Länge L im Bereich 10 mm < L < 120 mm eingesetzt, wobei die Breite B und die Länge L grösser als die halbe Wellenlänge der verwendeten Schallsignale ist.

Da die Schallwellen innerhalb des Flüssigkeitsflachstrahls nicht nach dem Prinzip eines Lichtleiters geleitet werden, wie dies bei den einzelnen Rundstrahlen nach dem Stand der Technik erfolgt, können die Unterschallsignale auf der Breite B mit höherer Energie eingekoppelt werden, so dass insgesamt ein höheres Signal-/Rauschverhältnis erreicht werden kann.

Aufgrund der Länge L können in einem Weitenbereich einerseits der Einschallungswinkel und/oder die Fokuszone eingestellt werden. Auch kann eine höhere Auflösung im Vergleich zum Stand der Technik erreicht werden.

Durch die spaltförmige Wasserauslassöffnung wird ein im Wesentlichen flächiger Wasserstrahl erzeugt, dessen Querschnitt rechteckförmig ausgebildet ist, mit der Möglichkeit, die Ultraschallsignale in ihrer Einschallrichtung und ihrer Fokuszone durch den Flachstrahl vorgegebenen Bereich einzustellen.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus den nachfolgenden der Zeichnung zu entnehmenden bevorzugten Ausführungsbeispielen.

Es zeigen:
- Fig. 1: eine Anordnung zur Ultraschallprüfung eines Bauteils mittels Wasserfreistrahltechnik,
- Fig. 2a, 2b, 2c: eine erste Ausführungsform einer Prüfkopfanordnung und
- Fig. 3a, 3b, 3c: eine zweite Ausführungsform einer Prüfkopfanordnung.

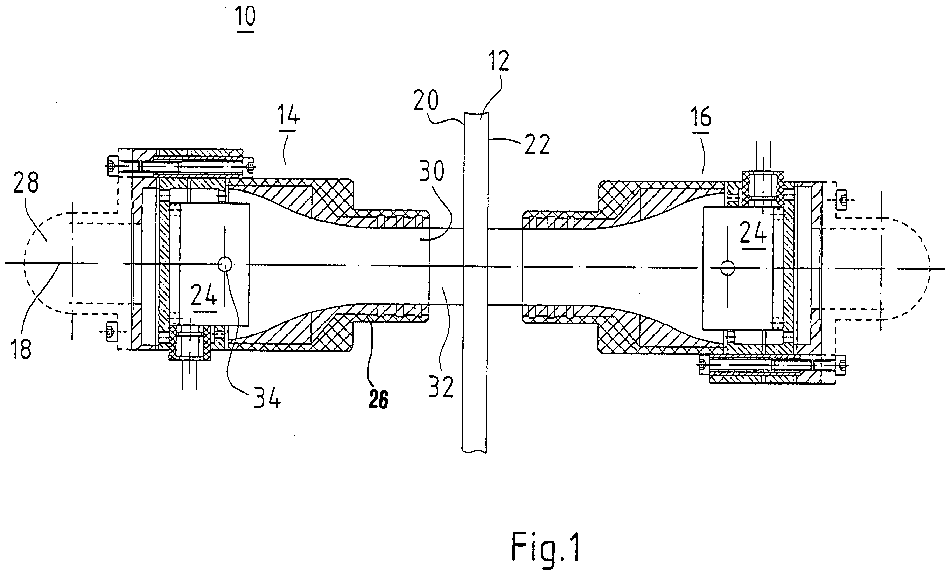

Fig. 1 zeigt eine Anordnung zur Prüfung eines Bauteils 12 mittels Ultraschallsignalen, die mit Hilfe der Wasserfreistrahltechnik an das zu prüfende Bauteil 12 angekoppelt werden.

Die Anordnung 10 umfasst eine erste Prüfkopfanordnung 14 sowie eine zweite Prüfkopfanordnung 16, die auf einer gemeinsamen Mittelachse 18 gegenüberliegend angeordnet sind und jeweils eine Oberfläche 20, 22 des Bauteils 12 nach dem Durchschallungsprinzip beschallen.

Die Prüfkopfanordnungen 14, 16 weisen im Wesentlichen den gleichen Aufbau auf, der nachfolgend anhand der Prüfkopfanordnung 14 näher erläutert wird. Die Prüfkopfanordnung 14 umfasst einen Prüfkopf 24 mit einer Vielzahl von Ultraschall-Sende- und/oder - Empfangselementen 25, die längs einer Reihe angeordnet sind. Die Sende- und/oder Empfangselemente sind über eine Ansteuereinheit in ihrer Phasenlage einstellbar (phased arrays), wodurch die Einschallrichtung und/oder die Fokuszone veränderbar ist.

Der Prüfkopf 24 ist in einer Strahldüse 26 angeordnet, welche einen Flüssigkeitseinlass 28 und einen Flüssigkeitsauslass 30 aufweist. Der Flüssigkeitsauslass ist derart gestaltet, dass dieser einen eine Ebene aufspannenden, laminaren flächigen Flüssigkeitsstrahl 32 erzeugt, über den die in dem Prüfkopf 24 erzeugten Ultraschallsignale an das Bauteil 12 ankoppelbar sind.

Dabei bildet der flächige Flüssigkeitsstrahl 22 einen Koppelkanal, in dem die Ultraschallsignale in ihrer Einschallrichtung und/oder ihrer Fokuszone einstellbar sind. Die Prüfkopfanordnung kann über eine Drehachse 34 in einer von dem Flüssigkeitsstrahl 32 aufgespannten Ebene verschwenkt werden.

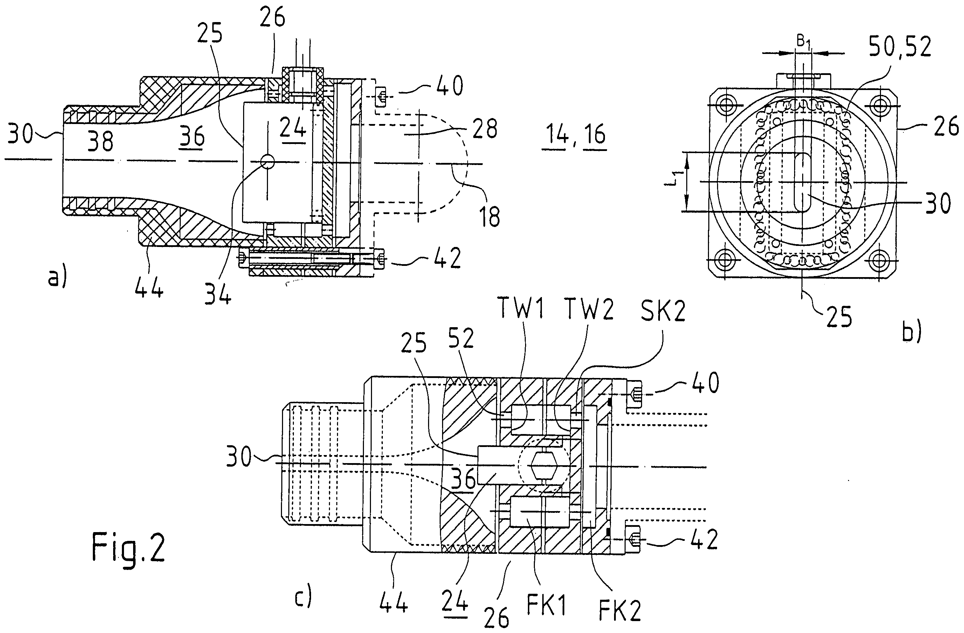

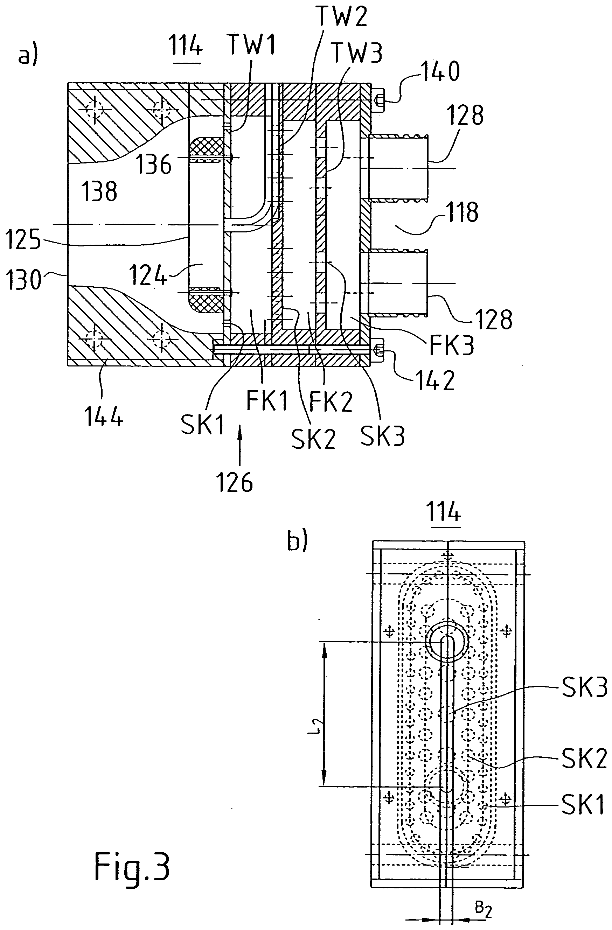

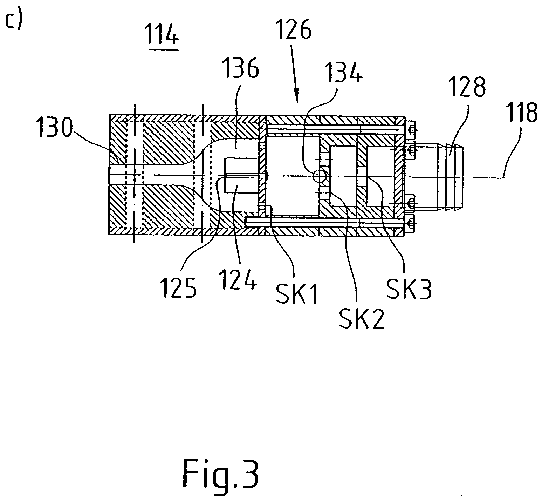

Weitere Einzelheiten zum technischen Aufbau der Prüfkopfanordnung 14, 16 werden mit Bezug zu den Fig. 2 und 3 beschrieben.

Fig. 2a, 2b und 2c zeigen verschiedene Ansichten der Prüfkopfanordnung 14 gemäß Fig. 1. Die Strahldüse 26 ist als Flachstrahldüse ausgebildet und umfasst einen im Wesentlichen trichterförmigen Strömungsraum 36, der in einen im Wesentlichen rechteckförmigen Auslasskanal 38 übergeht, der schließlich in der Auslassöffnung 30 mündet. Ein Querschnitt der Auslassöffnung 30 ist in Fig. 2b dargestellt. Im dargestellten Ausführungsbeispiel entspricht der Querschnitt der Auslassöffnung 30 im Wesentlichem einem Langloch mit der Länge L im Bereich von 10 mm < L < 40 mm, vorzugsweise L = 20 mm und einer Breite B im Bereich von 4 mm < B < 12 mm, vorzugsweise B = 6 mm.

Dem Strömungsraum 36 sind mehrere Filterkammern FK1, FK2 vorgeschaltet, um Turbulenzen aus der durch die Einlassöffnung 28 einströmende Flüssigkeit zu filtern. Zur Einstellung einer konstanten Strömung wird die Flüssigkeit über einen oder mehrere individuell verstellbare Durchflussmengenregler geführt. Die Strömungskammer 36 und die Filterkammern FK1, FK2 sind durch quer zur Strömungsrichtung verlaufende Trennwände TW1, TW2 voneinander getrennt, wobei in den Trennwänden TW1, TW2 jeweils Strömungskanäle SK1, SK2 angeordnet sind, derart, dass der Prüfkopf 24 im Wesentlichen koaxial von der Flüssigkeitsströmung umströmt wird. Schließlich mündet die Strömung in den Strömungskanal 36 und wird in diesem zu einer laminaren Strömung geformt. Fig. 2b zeigt, dass die Strömungskanäle SK1, SK2 der äußeren, rechteckigen Kontur des Prüfkopfes 24 angepasst sind. Die Filterkammern FK1, FK2 sind über Verbindungselemente 40, 42 mit einem den Strömungsraum 36 und den Auslasskanal aufnehmenden Düsenelement 44 verbunden.

Die Fig. 3a, 3b und 3c zeigen eine weitere Ausführungsform einer Prüfkopfanordnung 114, in der die dem ersten Ausführungsbeispiel entsprechenden Bauelemente durch ein um 100 erhöhtes Bezugszeichen gekennzeichnet sind.

Die Ausführungsform unterscheidet sich von der Ausführungsform gemäß Fig. 2 dadurch, dass die Auslassöffnung 130 eine Länge L im Bereich von 40 mm ≤ L ≤ 120 mm, vorzugsweise L = 90 mm und einer Breite B im Bereich von 4 mm ≤ B ≤ 20 mm, vorzugsweise B = 8 mm aufweist, so dass insgesamt ein breiterer laminarer Flüssigkeitsstrahl zur Ankopplung der Ultraschallwellen erzeugt werden kann.

Der Prüfkopf 124 ist im Wesentlichen vollständig in der Strömungskammer 136 angeordnet, wobei die Sende-/Empfangselemente 125 dieser in einer von dem Flüssigkeitsstrahl 32 aufgespannten Ebene angeordnet sind.

Im Unterschied zu der ersten Ausführungsform weist die Flachstrahldüse 126 insgesamt drei Filterkammern FK1, FK2, FK3 auf, die in Strömungsrichtung hintereinander angeordnet sind. Die Filterkammern FK1, FK2, FK3 sind über Trennwände TW1, TW2, TW3 voneinander getrennt, wobei jede Trennwand TW1, TW2, TW3 Strömungskanäle SK1, SK2, SK3 aufweist. Die Anzahl der Strömungskanäle SK1, SK2, SK3 in einer der Trennwände TW1, TW2, TW3 vergrößert sich in Strömungsrichtung, wobei sich der Durchmesser der Strömungskanäle SK1, SK2, SK3 der einzelnen Trennwände in Strömungsrichtung verringert. Die die einzelnen Filterkammern FK1, FK2, FK3 bildenden Filterelemente sind nach Art einer Reihenschaltung in Stapelbauweise über Verbindungselemente 140, 142 mit dem den Strömungskanal 138 und den Auslasskanal 136 aufnehmenden Düsenelement 140 verbunden.

Das Düsenelement 40, 140 sowie die Filterelemente FE1, FE2, FE3 können zur Überprüfung des Strömungsverhaltens aus transparentem Material wie beispielsweise Acrylglas hergestellt sein.

## Patentansprüche

1. Prüfkopfanordnung (14, 16) zur Ankopplung von Ultraschallsignalen an ein zu prüfendes Bauteil (12) mittels Wasserfreistrahltechnik, mit zumindest einem Flüssigkeitseinlass (28, 128) sowie zumindest einem Flüssigkeitsauslass (30, 130), wobei dem Flüssigkeitseinlass (28, 128) zumindest zwei Vorlauf- bzw. Filterkammern (FK1, FK2, FK3) nach geschaltet sind, wobei jede Vorlauf- bzw. Filterkammer (FK1, FK2, FK3) eine senkrecht zur Strömungsrichtung verlaufende, Strömungskanäle (SKI, SK2, SK3) aufweisende Trennwand (TW1, TW2, TW3) aufweist, wobei den Vorlauf- bzw. Filterkammern (FK1, FK2, FK3) eine Strahldüse (26, 126) mit einem Strömungsraum (36, 136) nachgeschaltet ist, in dem ein Prüfkopf (24, 124) mit einer Vielzahl von Ultraschall-Sende- und/oder -empfangselementen (25, 125) angeordnet ist,
wobei die Anzahl der Strömungskanäle (SKI, SK2, SK3) in den Trennwänden (TW1, TW2, TW3) in Strömungsrichtung zunimmt und der Durchmesser der Strömungskanäle (SKI, SK2, SK3) in den Trennwänden (TW1, TW2, TW3) in Strömungsrichtung verringert ist, und
die Strahldüse (26, 126) als Flachstrahldüse mit einem im Wesentlichen trichterförmigen Strömungsraum (36, 136) ausgebildet ist, der in einen im Wesentlichen spaltförmigen Auslasskanal (38, 138) mit einem Flüssigkeitsauslass (30, 130) übergeht, wobei sich innerhalb des Strömungsraumes (36, 136) eine laminare Wasserströmung einstellt und der Flüssigkeitsauslass (30, 130) derart gestaltet ist, dass dieser einen einzigen, eine Ebene aufspannenden, laminaren flächigen Flüssigkeitsstrahl (32) erzeugt, und zumindest zwei der Ultraschall-Sende- und/oder -empfangselemente (25, 125) diesem einzigen Flüssigkeitsstrahl (32) zugeordnet und über eine Ansteuereinheit in ihrer Phasenlage zur Veränderung einer Einschallrichtung und/oder Fokuszone derart einstellbar sind, dass zumindest die zwei von diesen Ultraschall-Sendeelementen (25, 125) ausgehenden Ultraschallsignale über den einzigen laminaren Flüssigkeitsstrahl (32) an das zu prüfende Bauteil (12) ankoppelbar sind, wobei die in dem Prüfkopf (24, 124) angeordneten Ultraschall-Sende- und/oder -empfangselemente (25, 125) in einer von dem Flüssigkeitsstrahl (32) aufgespannten Ebene angeordnet sind, der Prüfkopf (24, 124) in dem Strömungsraum (36, 136) angeordnet und koaxial von der Flüssigkeitsströmung umströmt ist, und der flächige Flüssigkeitsstrahl (32) einen Koppelkanal bildet, in dem die Ultraschallsignale in ihrer Einschallrichtung und/oder ihrer Fokuszone einstellbar sind.

2. Prüfkopfanordnung nach Anspruch 1,
**dadurch gekennzeichnet,**
**dass** die Strömungskanäle (SK1, SK2, SK3) als Bohrungen ausgeführt sind.

3. Prüfkopfanordnung nach Anspruch 1,
**dadurch gekennzeichnet,**
**dass** der Flüssigkeitseinlass (28, 128) entlang einer Mittelachse (18, 118) der Strahldüse (14, 114) angeordnet ist.

4. Prüfkopfanordnung nach Anspruch 1 oder 3,
**dadurch gekennzeichnet,**
**dass** bei zwei oder mehr Flüssigkeitseinlässen (28, 128) diese parallel oder im Wesentlichen parallel in einer von dem Flüssigkeitsstrahl (32) aufgespannten Ebene angeordnet sind.

5. Prüfkopfanordnung nach Anspruch 1,
**dadurch gekennzeichnet,**
**dass** die Strahldüse (26, 126) aus einem Kunststoffmaterial mit niedriger Schallgeschwindigkeit hergestellt ist.

6. Prüfkopfanordnung nach Anspruch 1, 3 oder 4,
**dadurch gekennzeichnet,**
**dass** den Flüssigkeitseinlässen (28, 128) individuelle Durchflussmengenregler vorgeschaltet sind.

## Claims

1. A probe arrangement (14, 16) for coupling ultrasonic signals to a component (12) to be inspected by the water open jet technique, with at least one liquid inlet (28, 128) and at least one liquid outlet (30, 130), with at least two preliminary or filter chambers (FK1, FK2, FK3) being situated downstream of the liquid inlet (28, 128), with each preliminary or filter chamber (FK1, FK2, FK3) having a dividing wall (TW1, TW2, TW3), which extends perpendicular to the direction of flow and has flow channels (SK1, SK2, SK3), a jet nozzle (26, 126) with a flow space (136), in which a probe (24, 124) with a plurality of ultrasonic transmitting and/or receiving elements (25, 125) is disposed, being situated downstream of the preliminary or filter chambers (FK1, FK2, FK3),
wherein
the number of flow channels (SK1, SK2, SK3) in the dividing walls (TW1, TW2, TW3) increases in the direction of flow and the diameter of the flow channels (SK1, SK2, SK3) in the dividing walls (TW1, TW2, TW3) is decreased in the direction of flow, and
the jet nozzle (26, 126) is designed as a flat jet nozzle with a substantially funnel-shaped flow space (36, 136) which transitions into a substantially slot-shaped outlet channel (38, 138) with a liquid outlet (30, 130), with a laminar water flow forming within the flow space (36, 136), and the liquid outlet (30, 130) being configured in such a way that it generates a single laminar flat liquid jet (32) forming a plane, and
at least two of the ultrasonic transmitting and/or receiving elements (25, 125) are assigned to this single liquid jet (32) and are adjustable in their phase relationships by means of a control unit for varying an acoustic radiation direction and/or focusing zone in such a way that the at least two ultrasonic signals emanating from these ultrasonic transmitting elements (25, 125) can be coupled to the component (12) to be inspected by the single laminar liquid jet (32), the ultrasonic transmitting and/or receiving elements (25, 125) disposed in the probe (24, 124) being arranged in a plane formed by the liquid jet (32), the probe (24, 124) being located in the flow space (36, 136) and the liquid flow flowing coaxially around it, and the flat liquid jet (32) forming a coupling channel, in which the ultrasonic signals are adjustable in their acoustic radiation direction and/or their focusing zone.

2. The probe arrangement according to claim 1,
**characterized in that**
the flow channels (SK1, SK2, SK3) are configured as bores.

3. The probe arrangement according to claim 1,
**characterized in that**
the liquid inlet (28, 128) is disposed along a central axis (18, 118) of the jet nozzle (14, 114).

4. The probe arrangement according to claim 1 or 3,
**characterized in that**
in the case of two or more liquid inlets (28, 128) they are located parallel or substantially parallel in a plane formed by the liquid jet (32).

5. The probe arrangement according to claim 1,
**characterized in that**
the jet nozzle (26, 126) is made of a synthetic material having low acoustic velocity.

6. The probe arrangement according to claim 1, 3 or 4,
**characterized in that**
individual flow regulators are situated upstream of the liquid inlets (28, 128).

## Revendications

1. Ensemble de palpeur (14, 16) destiné à coupler des signaux ultrasonores à un composant (12) à contrôler, au moyen de la technique à jet libre d'eau, comprenant au moins une entrée de liquide (28, 128) ainsi qu'au moins une sortie de liquide (30, 130), dans lequel au moins deux chambres amorce ou bien de filtrage (FK1, FK2, FK3) sont montées en aval de l'entrée de liquide (28, 128), dans lequel chaque chambre amorce ou bien de filtrage (FK1, FK2, FK3) présente une paroi de séparation (TW1, TW2, TW3) qui s'étend perpendiculairement au sens d'écoulement et qui présente des canaux d'écoulement (SK1, SK2, SK3), dans lequel une buse à jet (26, 126) ayant un espace d'écoulement (36, 136) à l'intérieur duquel est disposé un palpeur (24, 124) ayant une pluralité d'éléments émetteurs et/ou récepteurs d'ultrasons (25, 125) est montée en aval des chambres amorce ou bien de filtrage (FK1, FK2, FK3), dans lequel le nombre des canaux d'écoulement (SK1, SK2, SK3) dans les paroi de séparation (TW1, TW2, TW3) augmente dans le sens de l'écoulement et le diamètre des canaux d'écoulement (SK1, SK2, SK3) dans les parois de séparation (TW1, TW2, TW3) est diminué dans le sens de l'écoulement, et la buse à jet (26, 126) est réalisée en tant que buse à jet plat ayant un espace d'écoulement (36, 136) pour l'essentiel en forme d'entonnoir qui débouche dans un canal de sortie (38, 138) pour l'essentiel en forme de fente ayant une sortie de liquide (30, 130), dans lequel un écoulement d'eau laminaire s'établit à l'intérieur de l'espace d'écoulement (36, 136), et la sortie de liquide (30, 130) est configurée de telle manière que celle-ci génère un seul jet de liquide (32) plat laminaire définissant un plan, et au moins deux des éléments émetteurs et/ou récepteurs d'ultrasons (25, 125) sont associés à ce jet de liquide unique (32) et peuvent être réglés, via une unité de commande, dans leur position de phase pour modifier une direction d'irradiation acoustique et/ou une zone de foyer, de telle sorte qu'au moins les deux signaux ultrasonores provenant de ces éléments émetteurs d'ultrasons (25, 125) peuvent être couplés par ledit jet de liquide unique laminaire (32) au composant (12) à contrôler, dans lequel les éléments émetteurs et/ou récepteurs d'ultrasons (25, 125) disposés dans le palpeur (24, 124) sont disposés dans un plan défini par le jet de liquide (32), le palpeur (24, 124) est disposé dans l'espace d'écoulement (36, 136) et le courant de liquide s'écoule coaxialement autour de celui-ci, et le jet de liquide (32) plat forme un canal de couplage à l'intérieur duquel les signaux ultrasonores sont réglables dans leur direction d'irradiation acoustique et/ou leur zone de foyer.

2. Ensemble de palpeur selon la revendication 1, **caractérisé par le fait que** les canaux d'écoulement (SK1, SK2, SK3) sont réalisés en tant que perçages.

3. Ensemble de palpeur selon la revendication 1, **caractérisé par le fait que** ladite entrée de liquide (28, 128) est disposée le long d'un axe médian (18, 118) de la buse à jet (14, 114).

4. Ensemble de palpeur selon la revendication 1 ou 3, **caractérisé par le fait que**, dans le cas de deux ou plusieurs entrées de liquide (28, 128), celles-ci sont disposées parallèlement ou de manière pour l'essentiel parallèle dans un plan défini par le jet de liquide (32).

5. Ensemble de palpeur selon la revendication 1, **caractérisé par le fait que** la buse à jet (26, 126) est réalisée à partir d'une matière plastique ayant une faible vitesse de son.

6. Ensemble de palpeur selon la revendication 1, 3 ou 4, **caractérisé par le fait que** des régulateurs de débit individuels sont montés en amont des entrées de liquide (28, 128).
